# EUROPÄISCHE PATENTSCHRIFT

(11) **EP 0 829 971 B1**
(45) Veröffentlichungstag und Bekanntmachung des Hinweises auf die Patenterteilung: **26.10.2005**
(21) Anmeldenummer: 97114803.6
(22) Anmeldetag: 27.08.1997
(51) Int. Cl.: H04B 1/44

(54) **Schaltungsanordnung für einen Sende-Empfangsschalter**
Circuit for transmit-receive switching
Circuit pour commutation émission-réception

(30) Priorität: 28.08.1996 DE 19634677
(43) Veröffentlichungstag der Anmeldung: 18.03.1998
(73) Patentinhaber: EADS Deutschland GmbH, 81663 München (DE)
(72) Erfinder: Feldle, Heinz-Peter, Dr., 89250 Senden (DE); Ludwig, Michael, 89155 Erbach (DE); Reber, Rolf, 89073 Ulm (DE); Schweizer, Bernhard, 89077 Ulm (DE)
(74) Vertreter: Meel, Thomas

(56) Entgegenhaltungen:
- EP-A- 0 496 498
- EP-A- 0 622 908
- WO-A-97/03367

## Beschreibung

Die Erfindung betrifft ein Transmit/Receive-Modul eines aktiven Phased-Array-Radargeräts, umfassend eine Schaltungsanordnung zum Anschluß eines Sende/Empfangsgeräts an eine Sende/Empfangsstrecke sowie eine Sende/Empfangsstrecke.

Sende/Empfangsstrecken sind üblicherweise in Form von Drahtverbindungen oder Funkverbindungen oder als kombinierte Draht- und Funkverbindungen realisiert. An den Enden der Sende/Empfangsstrecke sind entsprechende Sende/Empfangsgeräte angeschlossen.

In vielen Anwendungen sind Sende/Empfangssysteme dieser Art so konzipiert, daß die Sende/Empfangsgeräte während des Sendebetriebs nicht empfangen können und umgekehrt während des Empfangsbetriebs nicht senden können.

In manchen Fällen werden solche Sende/Empfangssysteme als Schmalband-Sende/Empfangssysteme betrieben. Systeme dieser Art arbeiten nur in einem oder mehreren vorgegebenen schmalen Frequenzbändern, zwischen denen während des Betriebs hin- und hergeschaltet wird. Die Lage der Frequenzbänder kann dabei bis in den Mikrowellen- bzw. Millimeterwellenbereich reichen. Dementsprechend unterschiedlich sind auch die schaltungstechnischen Anforderungen und Randbedingungen, die bei der Konzeption der Sende/Empfanskanäle solcher Schmalband-Sende/Empfangssysteme zu beachten sind und die vor allem bei Systemen, die in unterschiedlichen Frequenzbändern betrieben werden können, einen erheblichen schaltungstechnischen Aufwand zur Folge haben.

In analogen Schmalband-Mehrkanal-Sende/Empfangssystemen für den Mikrowellenbereich beispielsweise sind verschiedene Signalaufbereitungen notwendig, um eine Nachrichtenverarbeitung durchführen zu können. Hierfür existieren spezielle Schaltungskonfigurationen, wie z.B. Frequenzumsetzer, Modulatoren, Amplituden- und Phasensteller, Schalter, die für die entsprechende Anwendung optimal sind. Zur Einstellung der Funktion sind Wandlerschaltungen notwendig, die z.B. aus einem digitalen Datenwort eine analoge Größe erzeugen.

In herkömmlichen Lösungen wurden diese Funktionen bislang getrennt realisiert. Die zunehmende Stabilität der Halbleiterprozessierung erlaubt jedoch heute eine monolithische Integration dieser Funktionen zusammen auf einem Halbleiter-Chip ("Mixed-Signal-Technologie").

Die Problematik, zahlreiche analoge und digitale Funktionen auf sehr beengtem Raum zu integrieren, tritt beispielsweise in sogenannten Transmit/Receive-Modulen ("T/R-Module") auf, die in modernen aktiven Phased-Array-Radargeräten verwendet werden. Der Einsatz der Mixed-Signal-Technologie führt hier zu einer drastischen Verringerung des Montage- und Bestükkungsaufwandes und damit zu erheblichen Kostensenkungen. Die entsprechenden Halbleiterbausteine können aus Galliumarsenid (GaAs) oder Silizium (Si) hergestellt werden. Ein Vergleich dieser Materialien läßt insbesondere moderne Si-Halbleiterprozesse für einen solchen Chip als geeignet erscheinen. Die Vorteile der Si-Halbleiterprozesse sind:
- Mixed-Signal-Technologie ist als Standard bereits eingeführt
- Hinreichend hohe Transitfrequenzen fₜ für Transistorzellen sind bereits heute verfügbar (fₜ:≈ 30 GHz)
- Geringere Materialkosten bei Verwendung-von Si anstelle von GaAs.

Aufgrund der elektrischen Materialeigenschaften können jedoch rauscharme Verstärker und HF-Leistungskomponenten im Mikrowellenbereich zumindest bei höheren Frequenzen weiterhin sinnvoll nur auf GaAs-Basis (oder auf Basis vergleichbarer anderer III/V-Halbleiter, wie z.B. InP) hergestellt werden.

Trotz dieser Reduktion im Aufwand durch die monolithische Integration verbleibt der systembedingte Nachteil bestehen, daß für die unterschiedlichen Betriebs-Frequenzbänder in der Regel der komplette Sende/Empfangskanal solcher Schmalband-Sende/Empfangssysteme individuell konzipiert und angepaßt werden muß.

Die EP 0 622 908 A2 beschreibt eine Schaltungsanordnung zum Anschluss eines Sende/Empfangsgeräts an eine Sende/Empfangsstrecke, welche einen Referenzoszillator beinhaltet, der über einen ersten Umschalter entweder mit einem ersten Mischer im Sendekanal oder mit einem zweiten Mischer im Empfangskanal verbindbar ist. Zwischen dem ersten Mischer und dem Sende/Empfangsgerät ist ein zweiter Umschalter geschaltet.
Die zwei Umschalter sind durch eine Ansteuerung so geschaltet, dass im Sendefall der Referenzoszillator mit dem ersten Mischer verbunden ist und der Sendekanal durchgeschaltet ist und der Empfangskanal unterbrochen ist und dass im Empfangsfall der Referenzoszillator mit dem zweiten Mischer verbunden ist und der Empfangskanal durchgeschaltet ist und der Sendekanal unterbrochen ist.

Die Aufgabe der Erfindung besteht darin, ein Transmit/Receive-Modul eines aktiven Phased-Array-Radargeräts zu schaffen, das mit möglichst wenigen baulichen Änderungs- und Anpassungsmaßnahmen für unterschiedliche Betriebsfrequenzbänder verwenden werden kann.

Die erfindungsgemäße Lösung der Aufgabe ist durch den Gegenstand des Patentanspruchs 1 wiedergegeben. Die übrigen Ansprüche enthalten vorteilhafte Aus- und Weiterbildungen der Erfindung.

Der wesentliche Vorteil der Erfindung ist darin zu sehen, daß durch die Ausbildung der erfindungsgemäßen Schaltungsanordnung zwischen Sende/Empfangsgerät auf der einen Seite und Sende/Empfangsstrecke des Transmit/Receive-Moduls auf der anderen Seite es nunmehr möglich ist, einen standardisierten Sende/Empfangsgerätetyp für die unterschiedlichsten Betriebsfrequenzbänder aus einem bestimmten Frequenzbereich zu verwenden. Da auch die erfindungsgemäße Schaltungsanordnung zunächst in diesem Frequenzbereich für alle Betriebsfrequenzbänder gleich, d.h. standardisiert ist, können sowohl der Sende/Empfangsgerätetyp wie auch die erfindungsgemäße Schaltungsanordnung kostengünstig in großen Stückzahlen hergestellt und auf einfache Weise in die einzelnen (und in der Regel nach wie vor individuell zu konzipierenden) Sende/Empfangsstrecken integriert werden.

Mit der Vereinfachung bzw. Standardisierung im Aufbau einher gehen eine Steigerung der Zuverlässigkeit der Schaltung insgesamt, eine Senkung der Herstellungskosten insgesamt, eine Verbesserung der Reproduzierbarkeit und die universelle Einsatzmöglichkeit für verschiedene Frequenzbereiche.

Im folgenden wird die Erfindung anhand der Figuren näher erläutert. Es zeigen
- FIG. 1-2: das Prinzip-Schaltbild der Schaltungsanordnung zum Anschluss eines Sende/Empfangsgeräts an die Sende/Empfangsstrecke des Transmit/Receive-Moduls gemäß der Erfindung für den Sendefall (FIG. 1) und für den Empfangsfall (FIG. 2)
- FIG. 3-4: zwei vorteilhafte Ausführungsbeispiele eines Transmit/Receive-Moduls eines Phased-Array-Radars gemäß der Erfindung.

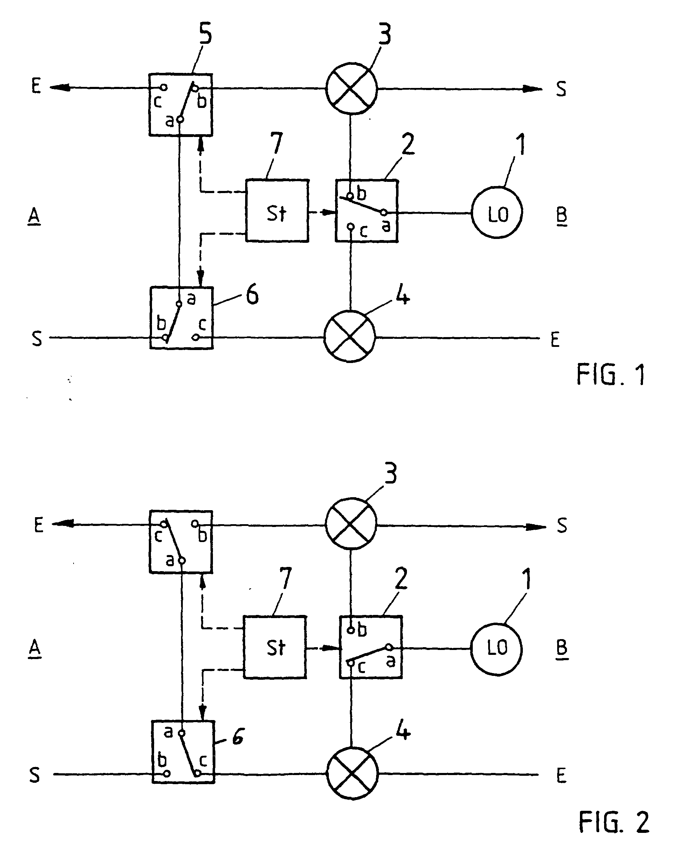

In FIG. 1 und 2, die beide dieselbe Schaltungsanordnung zeigen, ist mit S der Sendekanal und mit E der Empfangskanal bezeichnet, mit A die Schaltungsanordnungsseite, an der das (nicht gezeigte) Sende/Empfangsgerät angeschlossen ist, und mit B die Schaltungsanordnungsseite, an der die (ebenfalls nicht gezeigte) Sende/Empfangsstrecke angeschlossen ist.

Ein Referenzoszillator ("Local Oscillator (LO)") ist über einen ersten Umschalter 2 mit einem ersten Mischer 3 oder einem zweiten Mischer 4 verbindbar. Der erste Mischer 3 ist im Sendekanal S, der zweite Mischer ist im Empfangskanal E angeordnet. Zwischen erstem Mischer 3 und dem (nicht gezeigten) Sende/Empfangsgerät ist ein zweiter Umschalter 5 geschaltet und zwischen zweitem Mischer 4 und Sende/Empfangsgerät ist ein dritter Umschalter 6 geschaltet. Der zweite und dritte Umschalter 5, 6 sind miteinander verbunden. Alle drei Umschalter 2, 5 und 6 werden von einer gemeinsamen Ansteuerung 7 angesteuert.

Im Sendefall (FIG. 1) werden die drei Umschalter 2, 5 und 6 so geschaltet, daß der Referenzoszillator 1 über den ersten Umschalter 2 (Schaltstellung a, b) mit dem ersten Mischer 3 im Sendekanal S verbunden ist und der Sendekanal S über den zweiten und dritten Umschalter 5, 6 (Schaltstellung a, b) durchgeschaltet ist und der Empfangskanal E unterbrochen ist.

Im Empfangsfall (FIG. 2) werden die drei Umschalter 2, 5 und 6 synchron umgeschaltet (Schaltstellung a, c), so daß der Referenzosillator 1 über den ersten Umschalter 2 mit dem zweiten Mischer 4 im Empfangskanal E verbunden ist und der Empfangskanal E über den zweiten und dritten Umschalter 5, 6 durchgeschaltet ist und der Sendekanal S unterbrochen ist.

Durch entsprechende Wahl der Betriebsfrequenz des Referenzoszillators 1 ist es mit dieser Schaltungsanordnung möglich, die Frequenz des auf der Seite A von Sende/Empfangsgerät in dem Sendekanal S eingespeisten Sendesignals in das Betriebsfrequenzband der Sende/Empfangsstrecke (Seite B) zu transformieren und umgekehrt die Frequenz des über die Sende/Empfangsstrecke (Seite B) in den Empfangskanal E eingespeisten Empfangssignals in das Empfangssignal-Frequenzband des Sende/Empfangsgeräts (Seite A) zu transformieren.

Mit dieser Schaltung ist es möglich, im wesentlichen nur durch Änderung der Betriebsfrequenz des Referenzoszillators 1, ein und dasselbe Sende/Empfangsgerät (Seite A) für mehrere Betriebsfrequenzbänder nutzen zu können. Dies bedeutet vor allem bei monolithisch (teil-)integrierten Schaltungen für T/R-Module von Phased-Array-Radargeräten eine erhebliche Kostenersparnis, da wesentliche Schaltungsteile der T/R-Module als Standardbausteine in größeren Stückzahlen hergestellt werden können.

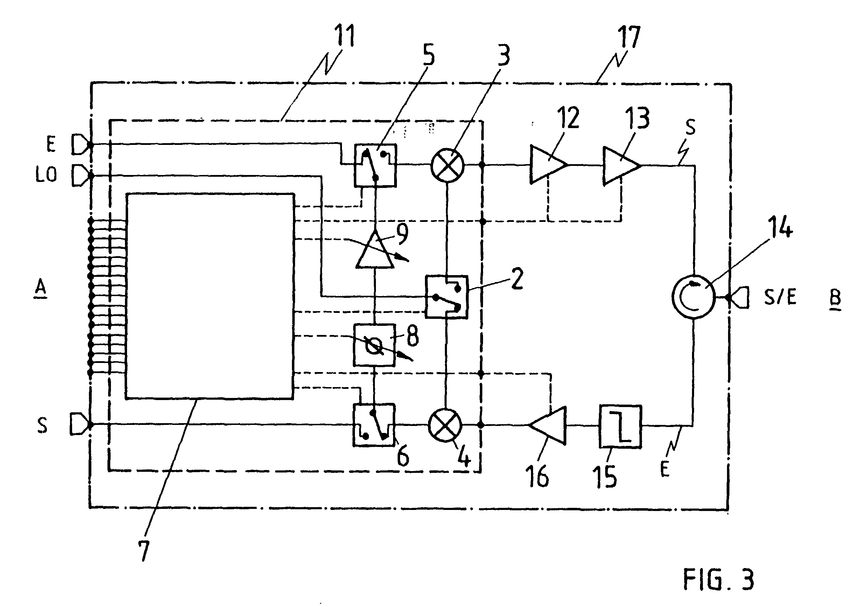

Die Umsetzung der Erfindung in eine monolithisch integrierte Schaltung für ein T/R-Modul eines Phased-Array-Radargeräts ist in FIG. 3 gezeigt. Zu sehen ist ein auf Silizium-Basis hergestellter erster Halbleiterchip 11, auf dem ein bevorzugtes Ausführungsbeispiel der erfindungsgemäßen Schaltungsanordnung (mit Ausnahme a) des Referenzoszillators (1 in FIG. 1 bzw. FIG. 2) und b) der als diskretes Bauelement ausgebildeten Ansteuerung (7 in FIG. 1 bzw. FIG. 2)) als monolithisch integrierte Schaltung realisiert worden ist. Der Chip 11 ist auf einem Substrat 17 angeordnet, auf dem Schaltungsteile der Sende/Empfangsstrecke angeordnet sind, die auf Galliumarsenid-Basis monolithisch integriert und mit der Schaltung auf dem Siliziumchip 11 verbunden sind.

Die Schaltung auf dem Si-Halbleiterchip 11 unterscheidet sich von der prinzipiellen Darstellung in FIG 1 bzw. FIG. 2 lediglich dadurch, daß zwischen dem zweiten und dritten Umschalter 5 bzw. 6 zusätzlich noch ein Phasendrehglied 8 und ein erster Verstärker 9 geschaltet sind, die beide von der Ansteuerung 7 angesteuert werden. Der (hier nicht gezeigte) Referenzoszillator LO ist über den ersten Umschalter 2 entweder mit dem ersten Mischer 3 im Sendekanal S oder mit dem zweiten Mischer 4 im Empfangskanal E verbindbar. Das (nicht gezeigte) Sende/Empfangsgerät wird auf der Seite A angeschlossen. Am Substrat 17 sind Anschlußpunkte für den Referenzoszillator LO, den Sendekanal S und den Empfangskanal E des Sende/Empfangsgeräts vorgesehen.

Der erste Mischer (3) ist ausgangsseitig über zwei zweite auf GaAs-Basis monolithisch integrierte Verstärker 12, 13 mit dem ersten Tor eines Zirkulators 14 verbunden. Das zweite Tor des Zirkulators 14 ist über einen ebenfalls auf GaAs-Basis monolithisch integrierten Begrenzer 15 und dritten Verstärker 16 mit dem zweiten Mischer 4 verbunden. Das dritte Tor des Zirkulators 14 ist mit einem Anschlußpunkt (S/E) für die (nicht gezeigte) Sende/Empfangsantenne (Seite B) verbunden. Die zwei zweiten Verstärker 12, 13 und der dritte Verstärker 16 werden ebenfalls von der Ansteuerung 7 angesteuert.

Die Schalterstellung der drei Umschalter 2, 5 und 6 entspricht der Schalterstellung gemäß FIG. 2 ("Empfangsfall"). Im "Sendefall" werden alle drei Umschalter 2, 5 und 6 synchron in die andere Schalterstellung umgeschaltet, was der Schalterstellung gemäß FIG. 1 entspricht.

Im dargestellten Empfangsfall werden die von der (nicht gezeigten) Antenne empfangenen Signale über den Zirkulator 14, den Begrenzer 15 und den dritten Verstärker 16 auf den zweiten Mischer 4 gegeben, dort mit dem über den ersten -Umschalter 2 ebenfalls auf den zweiten Mischer 4 gegebenen Ausgangssignal des Referenzoszillators LO in den Empfangsfrequenzbereich des (nicht gezeigten) Sende/Empfangsgeräts abgemischt, über den dritten Umschalter 6 dem Phasendrehglied 8 (zwecks Anpassung der Phase des abgemischten Empfangssignals) und dem ersten Verstärker 9 (zwecks Anpassung der Amplitude des abgemischten Empfangssignals) zugeleitet und von dort über den zweiten Umschalter 5 an den Empfangskanal des (nicht gezeigten) Sende/Empfangsgeräts weiter geleitet. Während also der Empfangskanal E durchgeschaltet ist, ist der Sendekanal S zweifach unterbrochen (durch die beiden Umschalter 5 und 6). Im (nicht dargestellten) Sendefall werden alle drei Umschalter 2, 5 und 6 synchron umgeschaltet, so daß das Sendesignal des Sende/Empfangsgeräts über den Sendekanal S, den dritten Umschalter 6, das Phasendrehglied 8, den ersten Verstärker 9, den zweiten Umschalter 5, den ersten Mischer 3, die beiden zweiten Verstärker 12, 13 zum Zirkulator 14 gelangen kann und von dort über den entsprechenden Anschlußpunkt S/E zur Sende/Empfangsantenne. Das Ausgangssignal des Referenzoszillators LO wird nunmehr über den ersten Umschalter 2 dem ersten Mischer 3 zugeleitet. Der Empfangskanal ist bei dieser Schalterstellung zweifach unterbrochen (durch die beiden Umschalter 5 und 6).

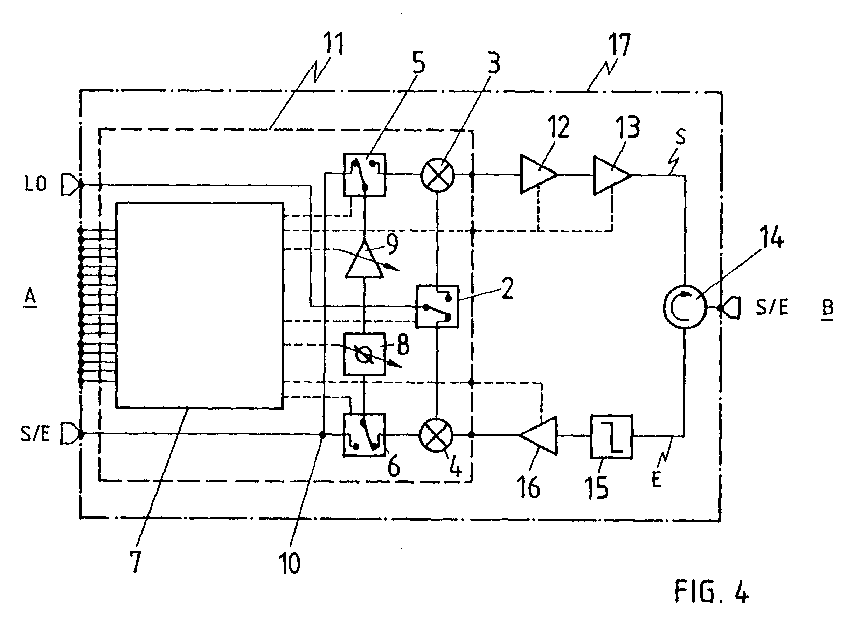

Die Schaltungsanordnung gemäß FIG. 4 unterscheidet sich von der gemäß FIG. 3 lediglich dadurch, daß der Sendekanal S und der Empfangskanal E sende/empfangsgeräteseitig (Seite A) auf dem Si-Halbleiterchip zu einem gemeinsamen Sende/Empfangskanal S/E zusammengefaßt sind, indem die Verbindungsleitungen vom zweiten und dritten Umschalter 5 und 6 zu dem Sende/Empfangsgerät an einen Verbindungspunkt 10 zu einer gemeinsamen Verbindungsleitung zusammengefaßt worden sind.

Mit den in FIG. 3 und FIG. 4 gezeigten Schaltungen können folgende Funktionen realisiert werden.
- Amplituden- und Phaseneinstellung des HF-Signals (Phasendrehglied 8, Verstärker 9)
- HF-Signalverteilung durch Schalter (Umschalter 5, 6)
- Frequenzumsetzung in die entsprechenden Radarfrequenzbänder (Mischer 3, 4)
- Datenwortaufbereitung durch Seriell/Parallel-Wandlung (Ansteuerung 7)

Von besonderem Vorteil ist die Möglichkeit der "on-chip"-Frequenzumsetzung. Dadurch ist gewährleistet, daß der Baustein universell in beliebigen Frequenzbändern eingesetzt werden kann. Dies ermöglicht große Stückzahlen und führt damit zu weiteren Kostensenkungen.

## Patentansprüche

1. Transmit/Receive-Modul eines aktiven Phased-Array-Radargeräts umfassend: eine Schaltungsanordnung zum Anschluss eines Sende/Empfangsgeräts an eine Sende/Empfangsstrecke, sowie eine Sende/Empfangsstrecke, wobei,
- ein Referenzoszillator (1) über einen ersten Umschalter (2) entweder mit einem ersten Mischer (3) im Sendekanal (S) oder mit einem zweiten Mischer (4) im Empfangskanal (E) verbindbar ist;
- zwischen dem ersten Mischer (3) und dem Sende/Empfangsgerät ein zweiter Umschalter (5) und zwischen dem zweiten Mischer (4) und dem Sende/Empfangsgerät ein dritter Umschalter (6) geschaltet ist;
- der zweite und dritte Umschalter (5,6) über ein Phasendrehglied (8) zur Anpassung der Phase des abgemischten Empfangssignals und einen ersten Verstärker (9) miteinander verbunden sind, wobei Phasendrehglied (8) und erster Verstärker (9) als monolithisch integrierte Schaltung auf Si-Basis ausgebildet sind;
- die drei Umschalter (2,5,6) durch eine Ansteuerung (7) so geschaltet sind, dass im Sendefall der Referenzoszillator (1) mit dem ersten Mischer (3) verbunden ist und der Sendekanal durchgeschaltet ist und der Empfangskanal unterbrochen ist und dass im Empfangsfall der Referenzoszillator (1) mit dem zweiten Mischer (4) verbunden ist und der Empfarigskanal durchgeschaltet ist und der Sendekanal unterbrochen ist;
- der erste Mischer (3) ausgangsseitig über zwei auf Basis eines III/V-Halbleiters monolithisch integrierte Verstärker (12,13) mit dem ersten Tor eines Zirkulators (14) verbunden ist,
- das zweite Tor des Zirkulators (14) über einen auf Basis eines III/V-Halbleiters monolithisch integrierten Begrenzer (15) und einen dritten Verstärker (16) mit dem zweiten Mischer (4) verbunden ist.

2. Transmit/Receive-Modul nach Anspruch 1, **dadurch gekennzeichnet, dass** das Phasendrehglied (8) und/oder der ersten Verstärker (9) durch die Ansteuerung (7) einstellbar sind.

3. Transmit/Receive-Modul nach einem der vorangehenden Ansprüche, **dadurch gekennzeichnet, dass** der zweite und dritte Umschalter (5,6) sende/empfangsgeräteseitig über einen Verbindungspunkt (10) an eine gemeinsame Sende/Empfangsleitung (S/E) angeschlossen sind.

## Claims

1. Transmit/receive module of an active phased array radar comprising:
a circuit arrangement for connection of a transmitter/receiver to a transmit/receive path, as well as a transmit/receive path, in which
- a reference oscillator (1) can be connected via a first changeover switch (2) either to a first mixer (3) in the transmit channel (S) or to a second mixer (4) in the receive channel (E);
- a second changeover switch (5) is connected between the first mixer (3) and the transmitter/receiver, and a third changeover switch (6) is connected between the second mixer (4) and the transmitter/receiver;
- the second and third changeover switches (5, 6) are connected to one another via a phase shifting element (8) for matching the phase of the down-mixed received signal and via a first amplifier (9), with the phase shifting element (8) and the first amplifier (9) being in the form of a silicon-based monolithically integrated circuit;
- the three changeover switches (2, 5, 6) are switched by a drive (7) such that, during transmission, the reference oscillator (1) is connected to the first mixer (3), the transmit channel is passed on and the receive channel is interrupted, and such that, during reception, the reference oscillator (1) is connected to the second mixer (4), the receive channel is passed on and the transmit channel is interrupted;
- the output side of the first mixer (3) is connected via two monolithically integrated amplifiers (12, 13), which are based on a III/V semiconductor, to the first port of a circulator (14), and
- the second port of the circulator (14) is connected to the second mixer (4) via a third amplifier (16) and via a monolithically integrated limiter (15) which is based on a III/V semiconductor.

2. Transmit/receive module according to Claim 1, **characterized in that** the phase shifting element (8) and/or the first amplifier (9) can be adjusted by the drive (7).

3. Transmit/receive module according to one of the preceding claims, **characterized in that** the second and third changeover switches (5, 6) are connected at the transmitter/receiver end via a junction point (10) to a common transmit/receive line (S/E).

## Revendications

1. Module d'émission/réception d'un appareil actif de radar réseau à commande de phase, comprenant un circuit de commutation pour le raccordement d'un appareil d'émission/réception à une ligne d'émission/réception, ainsi qu'une ligne d'émission/réception, dans lequel
- un oscillateur de référence (1) peut être raccordé via un premier inverseur (2) soit à un premier mélangeur (3) dans le canal d'émission (S) soit à un deuxième mélangeur (4) dans le canal de réception (E);
- un deuxième inverseur (5) est monté entre le premier mélangeur (3) et l'appareil d'émission-/réception et un troisième inverseur (6) est monté entre le deuxième mélangeur (4) et l'appareil d'émission/réception;
- le deuxième et le troisième inverseurs (5, 6) sont raccordés l'un à l'autre par un élément de rotation de phase (8) pour l'adaptation de la phase du signal de réception mélangé et par un premier amplificateur (9), l'élément de rotation de phase (8) et le premier amplificateur (9) formant un circuit intégré monolithique à base de silicium;
- les trois inverseurs (2, 5, 6) sont commutés par une commande (7) de telle façon que dans le cas de l'émission, l'oscillateur de référence (1) soit raccordé au premier mélangeur (3) et que le canal d'émission soit connecté et que le canal de réception soit interrompu, et que dans le cas de la réception l'oscillateur de référence (1) soit raccordé au deuxième mélangeur (4) et que le canal de réception soit connecté et que le canal d'émission soit interrompu;
- le premier mélangeur (3) est raccordé à sa sortie via deux amplificateurs (12, 13) intégrés monolithiques à base d'un semi-conducteur III/V à la première porte d'un circulateur (14);
- la deuxième porte du circulateur (14) est raccordée via un limiteur (15) intégré monolithique à base d'un semi-conducteur III/V et un troisième amplificateur (16) au deuxième mélangeur (4).

2. Module d'émission/réception selon la revendication 1, **caractérisé en ce que** l'élément de rotation de phase (8) et/ou le premier amplificateur (9) sont réglables par la commande (7).

3. Module d'émission/réception selon l'une quelconque des revendications précédentes, **caractérisé en ce que** le deuxième et le troisième inverseurs (5, 6) sont raccordés du côté de l'appareil d'émission/réception à une ligne d'émission/réception commune (S/E) via un point de raccordement (10).
